# EUROPÄISCHE PATENTSCHRIFT

(11) **EP 0 714 818 B1**
(45) Veröffentlichungstag und Bekanntmachung des Hinweises auf die Patenterteilung: **27.01.1999**
(21) Anmeldenummer: 95118875.4
(22) Anmeldetag: 30.11.1995
(51) Int. Cl.: B60R 21/22, B60R 21/16

(54) **Seitenaufprall-Gassack**
Side-impact air bag
Coussin gonflable pour collision latérale

(30) Priorität: 02.12.1994 DE 4443027
(43) Veröffentlichungstag der Anmeldung: 05.06.1996
(73) Patentinhaber: TRW Occupant Restraint Systems GmbH & Co. KG, 73551 Alfdorf (DE)
(72) Erfinder: Acker, Dominique, D-73553 Alfdorf (DE); Herpich, Thomas, D-73066 Uhingen-Sparwiesen (DE); Maier, Gunter, D-73072 Donzdorf-Winzingen (DE)
(74) Vertreter: Degwert, Hartmut, Dipl.-Phys.

(56) Entgegenhaltungen:
- US-A- 5 273 309
- US-A- 5 340 151
- PATENT ABSTRACTS OF JAPAN vol. 18 no. 602 (M-1705) ,16.November 1994 & JP-A-06 227348 (TOYOTA MOTOR CORP.) 16.August 1994,

## Beschreibung

Die Erfindung betrifft einen Seitenaufprall-Gassack für ein Fahrzeuginsassen-Rückhaltesystem, mit einer Wandung, in der zum Aufblasen des Gassackes eine Einlaßöffnung vorgesehen ist, sowie einer Trennwand im Inneren des Gassackes, welche den Innenraum des Gassackes in zwei benachbarte Kammern unterteilt, die durch eine in der Trennwand ausgebildete Verbindungsöffnung miteinander in Verbindung stehen können, wobei die Wandung des Gassackes im verstauten Zustand platzsparend zusammengelegt ist und der Gassack sich beim Aufblasen ausgehend von der Einlaßöffnung im wesentlichen in einer bevorzugten Entfaltungsrichtung entfaltet.

Ein solcher Seitenaufprall-Gassack der z.B aus der JP-A-06 227 348 bekanntist, ist dafür vorgesehen, einen Fahrzeuginsassen im Falle einer seitlichen Kollision zu schützen, und zwar sowohl bei einem seitlichen Aufprall des Fahrzeugs auf ein Hindernis als auch bei einem seitlichen Aufprall eines anderen Objekts auf das Fahrzeug. Im Gegensatz zu herkömmlichen Gassäcken, die in der Längsrichtung des Fahrzeugs gesehen vor dem Fahrzeuginsassen angebracht sind, muß ein Gassack für einen solchen Aufprall offensichtlich seitlich der Fahrzeuginsassen aufgeblasen werden. Gassäcke dieser Art sind im allgemeinen entweder in einer Türverkleidung oder in einem Seitenabschnitt des Sitzes angebracht.

Aus dem Anbringungsort sowie dem Einsatzzweck eines solchen Gassackes ergeben sich insbesondere zwei Forderungen. Zum einen muß ein solcher Gassack aufgrund der für sein Entfalten zur Verfügung stehenden eingeschränkten Raumverhältnisse im aufgeblasenen Zustand eine vergleichsweise geringe Dicke aufweisen, und zum anderen muß ein solcher Gassack aufgrund der bei einem Seitenaufprall zu Verfügung stehenden, sehr kurzen Knautschzone extrem schnell aufgeblasen werden.

Bei Gassäcken nach dem Stand der Technik wird die abgeflachte Form des aufgeblasenen Gassackes durch Fangbänder oder zusätzliche Gewebewände sichergestellt, die gesondert eingenäht werden müssen. Eine kurze Aufblaszeit läßt sich bei einem Seitenaufprall-Gassack dadurch erhalten, daß der Gassack mit einem vergleichsweise kleinen Volumen ausgeführt wird. Damit verbunden ist jedoch auch eine Verminderung der Schutzwirkung, da ein größerer Gassack auch einen verbesserten Schutz des Fahrzeuginsassen bedeutet.

Aufgabe der Erfindung ist, einen Gassack zu schaffen, der bereits vor seiner vollständigen Entfaltung einen ersten Schutz für einen Fahrzeuginsassen ausbilden kann und dafür bereits im Verlauf seinen Entfaltens geeignet positioniert wird.

Diese Aufgabe wird bei einem Gassack der eingangs genannten Art dadurch gelöst, daß die beiden Kammern länglich sind und ihre Längsrichtung mit der bevorzugten Entfaltungsrichtung übereinstimmt, daß die Einlaßöffnung an einem ersten Längsende und die Verbindungsöffnung an einem zweiten Längsende der ersten Kammer angeordnet ist und daß die Verbindungsöffnung im zusammengelegten Zustand der Wandung durch darüberliegende Wandungsteile verschlossen ist sowie bei der Entfaltung der Wandung erst bei Erreichen der Nähe des zweiten Längsendes der ersten Kammer freigegeben wird. Durch diese erfindungsgemäße Gestaltung eines Seitenaufprall-Gassackes wird erreicht, daß zuerst die erste Kammer des Gassackes gefüllt und korrekt positioniert wird, so daß schneller ein erster Schutz für einen Fahrzeuginsassen ausgebildet wird, und daß daran anschließend die zweite Kammer aufgeblasen wird, so daß dann die volle Schutzwirkung zur Verfügung steht.

Gemäß der bevorzugten Ausführungsform ist die Wandung aus einem einzigen Gewebeteil hergestellt, das aus einem ersten und einem zweiten Lappen sowie einem dazwischen angeordneten Mittellappen besteht, wobei die Trennwand von einem mittleren Streifen des Mittellappens gebildet ist, der den Mittellappen in einen ersten und einen zweiten Abschnitt unterteilt. Diese Ausführungsform bietet den Vorteil, daß die Trennwand aus dem einzigen Gewebeteil gebildet werden kann und keine zusätzlichen Fangbänder oder Gewebewände notwendig sind, die separat eingenäht werden müssen. Dies ermöglicht eine kostengünstige Herstellung des erfindungsgemäßen Gassackes.

Gemäß der bevorzugten Ausführung verläuft weiterhin die Wandung in einen Querschnitt senkrecht zur bevorzugten Entfaltungsrichtung im wesentlichen in Form einer Acht, und der Gassack ist aus dem Gewebeteil dadurch gebildet, daß der erste Lappen über den ersten Abschnitt des Mittellappens geklappt ist und ein in der bevorzugten Entfaltungsrichtung verlaufender, auf der Seite des zweiten Lappens liegender zweiter Randbereich des mittleren Streifens des Mittellappens mit einem über dem ersten Abschnitt liegenden Randbereich des ersten Lappens vernäht ist, wobei an dem Übergang zwischen dem ersten Lappen und dem Mittellappen eine in der bevorzugten Entfaltungsrichtung verlaufende erste Faltlinie entsteht, daß der zweite Lappen über den zweiten Abschnitt des Mittellappens geklappt ist und ein in der bevorzugten Entfaltungsrichtung verlaufender, auf der Seite des ersten Lappens liegender erster Randbereich des mittleren Streifens des Mittellappens mit einem über dem zweiten Abschnitt liegenden Randbereich des zweiten Lappens vernäht werden kann, wobei an dem Übergang zwischen dem zweiten Lappen und dem Mittellappen eine in der bevorzugten Entfaltungsrichtung verlaufende zweite Faltlinie entsteht, und daß die Außenränder des Gassackes miteinander vernäht sind. Aufgrund dieser Gestaltung des Gassackes kann die Trennwand entlang ihrer gesamten Länge mit den Gewebelappen der Wandung vernäht werden, was die Flächenbelastung der Naht und des Gewebes im Vergleich mit einer Gestaltung mit Fangbändern zur Stabilisierung der abgeflachten Form vermindert.

Die bevorzugte Ausführungsform der Erfindung wird nachfolgend unter Bezugnahme auf die Zeichnung beschrieben. In dieser zeigen:
- Fig. 1 den Gassack im zusammengelegten Zustand;
- Fig. 2 den Gassack von Fig. 1 in einem Zustand mit teilentfalteter erste Kammer;
- Fig. 3 den Gassack von Fig. 1 mit vollständig entfalteter erster Kammer;
- Fig. 4 den Gassack von Fig. 1 in einem vollständig entfalteten Zustand;
- Fig. 5 das Gewebeteil, aus dem der erfindungsgemäße Gassack hergestellt wird; und
- Fig. 6 einen Schnitt durch den aufgeblasenen Gassack senkrecht zur bevorzugten Entfaltungsrichtung.

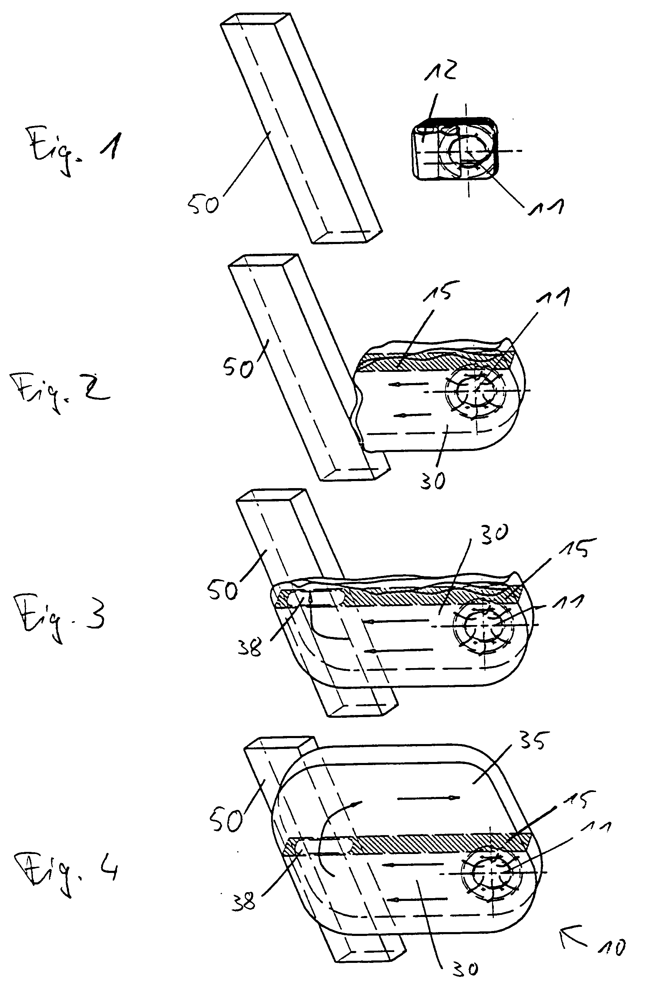

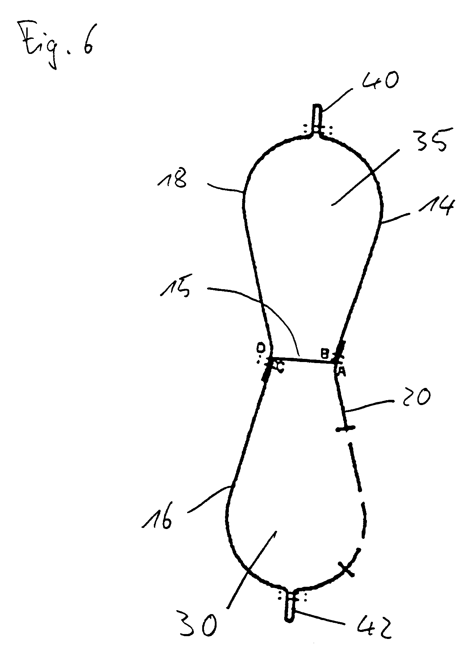

In den Figuren 1 bis 4 ist der erfindungsgemäße Gassack in verschiedenen Zuständen dargestellt. In Fig. 1 sieht man den îzusammengelegten Gassack 10, der beispielsweise in einer Türverkleidung eines Kraftfahrzeugs angeordnet ist. Der Gassack 10 (siehe auch Fig. 5) besteht aus zwei Lappen 18, 20 aus Gewebe, die mit einem Mittellappen aus Gewebe verbunden sind, der aus zwei Abschnitten 14, 16 und einem mittleren Streifen 15 besteht. In dem Lappen 18 ist eine Einlaßöffnung für das im Auslösungsfall von einem (nicht dargestellten) Gasgenerator entwickelte Gas zum Aufblasen des Gassackes 10 gebildet, in dem mittleren Streifen 15 ist eine Verbindungsöffnung 38 gebildet, durch welche eine bei dem vernähten Gassack 10 gebildete erste Kammer 30 des Gassackes 10 mit einer zweiten Kammer 35 in Verbindung stehen kann (siehe auch Fig. 6).

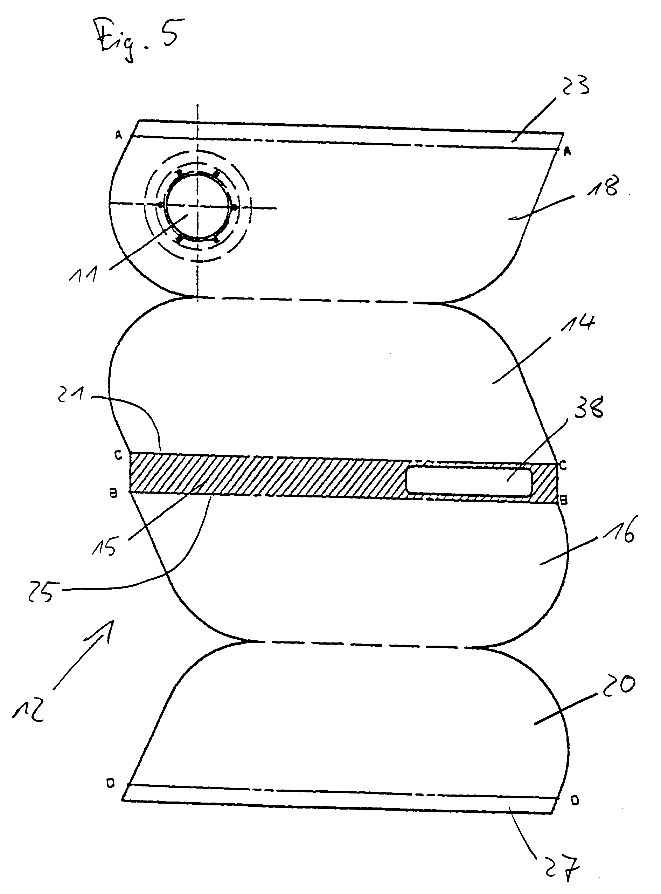

In den in Fig. 1 dargestellten, zusammengelegten Zustand wird der Gassack 10, dessen aufgeblasene Form in Fig. 4 zu sehen ist, dadurch überführt, daß der entleerte ausgebreitete Gassack zuerst im wesentlichen entlang der Trennwand 15 so längsgefaltet wird, daß die Wandung der zweiten Kammer 35 auf die Wandung der ersten Kammer 30 gefaltet wird. Dann wird die Wandung der beiden Kammern ausgehend von dem von der Einlaßöffnung 11 abgewandten Längsende der gefalteten Wandung 12 zur Einlaßöffnung 11 hin aufgerollt. Das Ergebnis dieser Faltung ist in Fig. 1 zu sehen, in der links neben der Einlaßöffnung 11 der aufgerollte Teil der Wandung 12 zu sehen ist. In Fig. 1 ist ferner eine Fahrzeug-B-Säule 50 dargestellt, die einen Teil der Fahrzeugstruktur symbolisiert, die im Falle eines Seitenaufpralls von besonderer Gefahr für einen Fahrzeuginsassen ist und daher von einem entfalteten Gassack abgedeckt werden muß.

Aus der Anordnung des Gassackes ergibt sich, daß er sich im Falle eines Seitenaufpralls bevorzugt in der Fahrzeuglängsrichtung entfalten muß, um einen großen Seitenbereich der Fahrzeugstruktur abzudecken, insbesondere die Fahrzeug-B-Säule 50. Aufgrund der besonderen Gestaltung des erfindungsgemäßen Gassackes ist die bevorzugte Entfaltungsrichtung ferner so orientiert, daß sich die Trennwand des Gassackes im aufgeblasenen Zustand im wesentlichen waagrecht erstreckt.

In Fig. 2 ist der Gassack 10 mit teilentfalteter erster Kammer 30 zu sehen. Das nach Zündung eines (nicht dargestellten) Gasgenerators durch die Einlaßöffnung 11 in den Gassack 10 einströmende Gas ist durch die Pfeile symbolisiert und wird zuerst die erste Kammer 30 entlang der bevorzugten Entfaltungsrichtung des Gassackes 10, die mit der Längsrichtung der Kammer übereinstimmt, auf die B-Säule zu entfalten.

In Fig. 3 ist der Gassack 10 mit vollständig entfalteter erster Kammer 30 zu sehen. Am von der Einlaßöffnung 11 abgewandten Ende der Trennwand 15 ist insbesondere die Verbindungsöffnung 38 zu sehen, durch die die zweite Kammer 35 mit der ersten Kammer 30 in Verbindung steht. Diese Verbindungsöffnung 38 ist im wesentlichen erst in dem in Fig. 3 dargestellten Zustand des Gassackes freigegeben, da sie vorher durch darüberliegende Wandungsteile der Gassackes 10 verschlossen ist. Da diese Verbindungsöffnung 38 erst dann freigegeben ist, wenn die erste Kammer 30 im wesentlichen vollständig entfaltet ist, wird der Gassack 10 während eines ersten Abschnitts des Entfaltungsvorganges im wesentlichen nur in Richtung der bevorzugten Entfaltungsrichtung aufgeblasen, weshalb er besonders schnell eine Position erreicht, in der er einen ersten Schutz für einen Fahrzeuginsassen ausbilden kann.

Nach Beendigung dieses ersten Abschnitts des Aufblasvorganges wird dann die zweite Kammer 35 durch die erste Kammer 30 und die Verbindungsöffnung 38 hindurch gefüllt, so daß der Gassack seine in Fig. 4 dargestellte, vollständig entfaltete Form erhält und den vollständigen Schutz für einen Fahrzeuginsassen bieten kann.

Gemäß der bevorzugten Ausführung der Erfindung ist der Gassack aus einem einzigen Gewebeteil hergestellt, wobei insbesondere auch die Trennwand 15 Teil dieses Gewebeteils ist und daher nicht getrennt eingenäht werden muß. Dieses Gewebeteil ist in Fig. 5 dargestellt. Man sieht in dieser Figur, daß das Gewebeteil aus einem ersten Lappen 18, einem zweiten Lappen 20 sowie einem zwischen diesen beiden Lappen angeordneten Mittellappen besteht, der aus einem ersten Abschnitt 14, einem zweiten Abschnitt 16 sowie einem zwischen diesen liegenden mittleren Streifen 15 gebildet ist. Dieser Streifen 15 bildet bei dem fertig vernähten Gassack die Trennwand. In Fig. 5 ist ferner die in dem ersten Lappen 18 angeordnete Einlaßöffnung 11 sowie die in dem mittleren Streifen 15 angeordnete Verbindungsöffnung 38 zu sehen.

Aus diesem Gewebeteil wird der Gassack dadurch gebildet (siehe auch Fig. 6), daß der erste Lappen 18 so über den ersten Abschnitt 14 des Mittellappens geklappt wird, daß ein in der bevorzugten Entfaltungsrichtung verlaufender, auf der Seite des zweiten Lappens 16 liegender zweiter Randbereich 25 des mittleren Streifens 15 des Mittellappens mit einem über dem ersten Abschnitt 14 liegenden Randbereich 23 des ersten Lappens 18 vernäht werden kann, wobei an dem Übergang zwischen dem ersten Lappen 18 und dem Mittellappen 14 eine in der bevorzugten Entfaltungsrichtung verlaufende erste Faltlinie 40 entsteht, und daß der zweite Lappen 20 dann so über den zweiten Abschnitt 16 des Mittellappens geklappt wird, daß ein in der bevorzugten Entfaltungsrichtung verlaufender, auf der Seite des ersten Lappens 18 liegender erster Randbereich 21 des mittleren Streifens 15 des Mittellappens mit einem über dem zweiten Abschnitt 16 liegenden Randbereich 27 des zweiten Lappens 20 vernäht werden kann, wobei an dem Übergang zwischen dem zweiten Lappen 20 und dem Mittellappen eine in der bevorzugten Entfaltungsrichtung verlaufende zweite Faltlinie 42 entsteht.

Dann wird der erste Randbereich 21 bzw. der zweite Randbereich 25 des mittleren Streifens 15 mit dem Randbereich 27 des zweiten Lappens 20 bzw. dem Randbereich 23 des ersten Lappens 18 vernäht. Diese Nähte sind in Fig. 6 mit den Bezugszeichen A-B bzw. C-D angedeutet.

Schließlich wird der außenliegende Rand des ersten Lappens 18 bzw. des zweiten Lappens 20 mit dem außenliegenden Rand des ersten Abschnittes 14 bzw. des zweiten Abschnittes 16 des Mittellappens vernäht, wobei auch die Faltlinie 40 bzw. 42 am Übergang zwischen dem ersten Lappen 18 bzw. dem zweiten Lappen 20 und dem entsprechenden Abschnitt 14 bzw. 16 des Mittellappens in diese Naht mit einbezogen werden kann, wie in Fig. 6 zu sehen ist. In dieser Figur ist weiterhin zu sehen, daß die Wandung des vernähten Gassackes aufgrund dieser Herstellungsweise im wesentlichen in Form einer Acht verläuft. Ferner ist zu sehen, daß die erste Kammer 30 und die zweite Kammer 35 im wesentlichen das gleiche Volumen aufweisen.

## Patentansprüche

1. Seitenaufprall-Gassack für ein Fahrzeuginsassen-Rückhaltesystem, mit einer Wandung (12), in der zum Aufblasen des Gassackes (10) eine Einlaßöffnung (11) vorgesehen ist, sowie einer Trennwand (15) im Inneren des Gassackes, welche den Innenraum des Gassackes (10) in zwei benachbarte Kammern (30, 35) unterteilt, die durch eine in der Trennwand (15) ausgebildete Verbindungsöffnung (38) miteinander in Verbindung stehen können, wobei die Wandung (12) des Gassackes (10) im verstauten Zustand platzsparend zusammengelegt ist und der Gassack (10) sich beim Aufblasen ausgehend von der Einlaßöffnung (11) im wesentlichen in einer bevorzugten Entfaltungsrichtung entfaltet, dadurch gekennzeichnet, daß die beiden Kammern (30, 35) länglich sind und ihre Längsrichtung mit der bevorzugten Entfaltungsrichtung übereinstimmt, daß die Einlaßöffnung (11) an einem ersten Längsende und die Verbindungsöffnung (38) an einem zweiten Längsende der ersten Kammer (30) angeordnet ist und daß die Verbindungsöffnung (38) im zusammengelegten Zustand der Wandung (12) durch darüberliegende Wandungsteile verschlossen ist sowie bei der Entfaltung der Wandung (12) erst bei Erreichen der Nähe des zweiten Längsendes der ersten Kammer (30) freigegeben wird.

2. Gassack nach Anspruch 1, dadurch gekennzeichnet, daß die Wandung (12) im verstauten Zustand durch Längsfaltung im wesentlichen entlang der Trennwand (15) sowie durch Übereinanderlegen ausgehend von dem von der Einlaßöffnung (11) abgewandten Längsende der gefalteten Wandung (12) zur Einlaßöffnung (11) hin zusammengelegt ist.

3. Gassack nach Anspruch 2, dadurch gekennzeichnet, daß die längsgefaltete Wandung (12) im verstauten Zustand zum Einlaßende hin aufgerollt wird.

4. Gassack nach Anspruch 1, dadurch gekennzeichnet, daß die Wandung (12) aus einem einzigen Gewebeteil hergestellt ist, das aus einem ersten und einem zweiten Lappen (18, 20) sowie einem dazwischen angeordneten Mittellappen (14, 15, 16) besteht, wobei die Trennwand von einem mittleren Streifen (15) des Mittellappens (14, 15, 16) gebildet ist, der den Mittellappen (14, 15, 16) in einen ersten und einen zweiten Abschnitt (14, 16) unterteilt.

5. Gassack nach Anspruch 4, dadurch gekennzeichnet, daß die Wandung (12) in einem Querschnitt senkrecht zur bevorzugten Entfaltungsrichtung im wesentlichen in Form einer Acht verläuft und daß der Gassack (10) aus dem Gewebeteil dadurch gebildet ist, daß der erste Lappen (18) über den ersten Abschnitt (14) des Mittellappens geklappt ist und ein in der bevorzugten Entfaltungsrichtung verlaufender, auf der Seite des zweiten Lappens (16) liegender zweiter Randbereich (25) des mittleren Streifens (15) des Mittellappens mit einem über dem ersten Abschnitt (14) liegenden Randbereich (23) des ersten Lappens (18) vernäht ist, wobei an dem Übergang zwischen dem ersten Lappen (18) und dem Mittellappen (14) eine in der bevorzugten Entfaltungsrichtung verlaufende erste Faltlinie (40) entsteht, daß der zweite Lappen (20) über den zweiten Abschnitt (16) des Mittellappens geklappt ist und ein in der bevorzugten Entfaltungsrichtung verlaufender, auf der Seite des ersten Lappens (18) liegender erster Randbereich (21) des mittleren Streifens (15) des Mittellappens mit einem über dem zweiten Abschnitt (16) liegenden Randbereich (27) des zweiten Lappens (20) vernäht ist, wobei an dem Übergang zwischen dem zweiten Lappen (20) und dem Mittellappen eine in der bevorzugten Entfaltungsrichtung verlaufende zweite Faltlinie (42) entsteht, und daß die Außenränder des Gassackes (10) miteinander vernäht sind.

6. Gassack nach einem der vorhergehenden Ansprüche, dadurch gekennzeichnet, daß sich die Trennwand (15) im aufgeblasenen Zustand des Gassackes (10) im wesentlichen waagrecht und in Richtung der Fahrzeuglängsachse erstreckt.

7. Gassack nach einem der vorhergehenden Ansprüche, dadurch gekennzeichnet, daß die erste und die zweite Kammer (30, 35) im wesentlichen das gleiche Volumen aufweisen.

## Claims

1. A lateral impact gas bag for a vehicle occupant restraint system, comprising a wall (12) in which an inlet opening (11) for the inflation of the gas bag (10) is provided, and furthermore a partition (15) in the interior of the gas bag, which divides the interior of the gas bag (10) into two adjacent chambers (30, 35), which may communicate with each other through a connecting opening (38) formed in the partition (15), the wall (12) of the gas bag (10) being folded up in a space saving manner in a stowed condition thereof and the gas bag (10) being adapted to deploy during inflation substantially in a preferred deployment direction extending from the inlet opening (11), characterized in that the two chambers (30, 35) are elongated and the longitudinal extent thereof coincides with the preferred deployment direction, that the inlet opening (11) is provided at a first longitudinal end and the connecting opening (38) is provided at a second longitudinal end of the first chamber (30), and that the connecting opening (38) is shut off, in the folded condition of the wall (12), by overlying wall parts and during deployment of the wall (12) is released only on reaching a point in the vicinity of the second longitudinal end of the first chamber (30).

2. The gas bag as claimed in claim 1, characterized in that in the stowed condition the wall (12) is folded up by longitudinal folding substantially along the partition (15) and by superposition starting at the longitudinal end, remote from the inlet opening (11), of the folded wall (12) towards the inlet opening (11).

3. The gas bag as claimed in claim 2, characterized in that the longitudinally folded wall (12) is rolled up towards the inlet end in the stowed condition.

4. The gas bag as claimed in claim 1, characterized in that the wall (12) is formed from a single fabric part which comprises a first and a second ply (18, 20) and an intermediately placed middle ply (14, 15, 16), the partition being constituted by a middle strip (15) of the middle ply (14, 15, 16) which divides the middle ply (14, 15, 16) into a first and a second section (14, 16).

5. The gas bag as claimed in claim 4, characterized in that the wall (12) extends in a cross section perpendicular to the preferred deployment direction substantially in the form of a figure eight and in that the gas bag (10) is formed from the fabric part in that the first ply (18) is folded over the first section (14) of the middle ply and a second marginal part (25), extending in the preferred deployment direction on the side of the second ply (16), of the middle strip (15) of the middle ply is stitched to a marginal part (23), extending over the first section (14), of the first ply (18), and at the transition between the first ply (18) and the middle ply (14) a first fold line (40) is produced extending in the preferred deployment direction, in that the second ply (20) is folded over the second section (16) of the middle ply and a first marginal part (21), extending in the preferred deployment direction on the side of the first ply (18), of the middle strip (15) of the middle ply is stitched to a marginal part (27), extending over the second section (16), of the second ply (20), and at the transition between the second ply (20) and the middle ply a second fold line (42) is produced extending in the preferred deployment direction, and in that the outer edges of the gas bag (10) are stitched together.

6. The gas bag as claimed in any one of the preceding claims, characterized in that in the inflated condition of the gas bag (10) the partition (15) extends substantially horizontally and in the direction of the longitudinal axis of the vehicle.

7. The gas bag as claimed in any one of the preceding claims, characterized in that the first and the second chambers (30, 35) possess substantially the same volume.

## Revendications

1. Coussin d'air contre les chocs latéraux pour un système de retenue des passagers d'un véhicule, avec une paroi (12) dans laquelle est prévu un orifice d'entrée (11) pour gonfler le coussin d'air (10), et avec une cloison de séparation (15) à l'intérieur du coussin d'air, cloison qui subdivise l'intérieur du coussin d'air (10) en deux chambres voisines (30, 35), lesquelles peuvent être mises en liaison par un orifice de liaison (38), constitué dans la cloison de séparation (15), la paroi (12) du coussin d'air (10) étant repliée en position d'arrimage de façon à ne pas encombrer et le coussin d'air (10) se déployant lors du gonflage en partant de l'orifice d'entrée (11) essentiellement dans une direction privilégiée de déploiement, coussin d'air caractérisé en ce que les deux chambres (30, 35) sont allongées et leur direction longitudinale coïncide avec la direction privilégiée de déploiement, en ce que l'orifice d'entrée (11) est disposé à une première extrémité dans le sens de la longueur et l'orifice de liaison (38) est disposé à une seconde extrémité, dans le sens de la longueur, de la première chambre (30), et en ce que l'orifice de liaison (38), quand la paroi (12) est en position de repliement, est fermé par des éléments de paroi se trouvant au-dessus et quand la paroi (12) se déplie la première chambre (30) est libéré seulement en arrivant à proximité de la seconde extrémité, dans le sens de la longueur, de la première chambre (30).

2. Coussin d'air selon la revendication 1, caractérisé en ce que la paroi (12), quand elle est en position d'arrimage, est repliée en direction de l'orifice d'entrée (11) par un pliage longitudinal sensiblement le long de la cloison de séparation (15) et en se mettant l'un sur l'autre, en partant de l'extrémité, dans le sens de la longueur, de la paroi repliée (12), située à l'opposé de l'orifice d'entrée (11).

3. Coussin d'air selon la revendication 2, caractérisé en ce que la paroi (12) repliée dans le sens de la longueur est, en position d'arrimage, enroulée en direction de l'extrémité d'entrée.

4. Coussin d'air selon la revendication 1, caractérisé en ce que la paroi (12) est fabriquée à partir d'une pièce de tissu unique, qui consiste en un premier et un second lés (18, 20) et un lé central (14, 15, 16), disposé entre eux, la cloison de séparation étant formée par une bande centrale (15) du lé du milieu (14, 15, 16), qui subdivise le lé du milieu (14, 15, 16) en une première et une seconde section (14, 16).

5. Coussin d'air selon la revendication 4, caractérisé en ce que la paroi (12) s'étend dans une section transversale perpendiculairement à la direction privilégiée de déploiement en formant sensiblement un huit et en ce que le coussin d'air (10) est constitué à partir de la pièce de tissu d'une manière telle que le premier lé (18) est replié sur la première section (14) du lé du milieu et une deuxième zone de bordure (25), qui s'étend dans la direction privilégiée de déploiement et qui se trouve sur le côté du second lé (16), de la bande centrale (15) du lé du milieu, est cousue avec une zone de bordure (23) du premier lé (18), qui se trouve sur la première section (14), une première ligne de pliage (40), qui s'étend dans la direction privilégiée du déploiement, se produisant au passage entre le premier lé (18) et le lé du milieu (14), en ce que le second lé (20) est replié sur la seconde section (16) du lé du milieu et une première zone de bordure (21) de la bande centrale (15) du lé du milieu, zone de bordure qui s'étend dans le sens privilégié de déploiement et qui se trouve sur le coté du premier lé (18), est cousue avec une zone de bordure (27) du second lé (20), qui se trouve sur la seconde section (16), une seconde ligne de pliage (42), qui s'étend dans la direction privilégiée du déploiement, se produisant au passage entre le second lé (20) et le lé du milieu, et en ce que les bords extérieurs du coussin d'air (10) sont cousus ensemble.

6. Coussin d'air selon l'une des revendications précédentes, caractérisé en ce que la cloison de séparation (15) s'étend de façon sensiblement horizontale et dans le sens de l'axe longitudinal du véhicule, quand le coussin d'air (10) est en position gonflée.

7. Coussin d'air selon l'une des revendications précédentes, caractérisé en ce que la première et la seconde chambre (30, 35) présentent sensiblement le même volume.
